(19) **Europäisches Patentamt** / **European Patent Office** / **Office européen des brevets**

(11) **EP 4 671 225 A1**

(12) **EUROPEAN PATENT APPLICATION**
published in accordance with Art. 153(4) EPC

(43) Date of publication:
**31.12.2025 Bulletin 2026/01**

(21) Application number: **24760530.6**

(22) Date of filing: **20.02.2024**

(51) International Patent Classification (IPC):
*C04B 35/113* (2006.01)    *H01M 10/0562* (2010.01)
*H01M 10/054* (2010.01)

(52) Cooperative Patent Classification (CPC):
Y02E 60/10

(86) International application number:
**PCT/KR2024/002166**

(87) International publication number:
**WO 2024/177341 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.02.2023 KR 20230022926**

(71) Applicant: **Konkuk University Industrial Cooperation Corp**
**Seoul 05029 (KR)**

(72) Inventor: **LIM, Sung Ki**
**Namyangju-si, Gyeonggi-do 12023 (KR)**

(74) Representative: **Dehns**
**10 Old Bailey**
**London EC4M 7NG (GB)**

(54) **METHOD FOR PRODUCING SOLID SODIUM ELECTROLYTE THROUGH GAS-PHASE CONVERSION, SOLID SODIUM ELECTROLYTE, AND LAMINATE FOR PRODUCING SOLID SODIUM ELECTROLYTE**

(57) A method for producing a sodium solid electrolyte according to an embodiment of the present invention comprises the steps of: (a) preparing sintered bodies for beta-alumina production and powder pellets comprising a sodium source (or powder packs); (b) laminating the sintered bodies and the powder pellets comprising a sodium source (or powder packs) in alternation to prepare a stack; and (c) heat-treating the stack to subject the sintered bodies to vapor-phase conversion, wherein the powder pellets (or powder packs) may be molded bodies of powder containing a sodium source.

[FIG. 1]

**Description**

**TECHNICAL FIELD**

The present invention relates to a method for producing a sodium solid electrolyte by vapor-phase conversion, a sodium solid electrolyte and a stack for producing a sodium solid electrolyte.

**BACKGROUND ART**

High-temperature sodium secondary batteries used in medium- and large-scale power storage devices, such energy storage systems (ESS), can be priced lower than lithium-ion batteries (LIBs) because they use sodium, which has high energy density and is cheaper than lithium. However, with current technology, sodium secondary batteries are more expensive to manufacture than lithium-ion batteries, and thus, lithium-ion batteries have an advantage in price competitiveness. Since the cost of manufacturing solid electrolytes accounts for a large portion of the manufacturing cost of sodium secondary batteries, there is a need to reduce the manufacturing cost of solid electrolytes to increase price competitiveness.

Meanwhile, beta-alumina ($\beta$-alumina) is a general term for $\beta$-alumina, $\beta''$-alumina or a mixture thereof, and is expressed by a chemical formula $(1+x)Na_2O_{11}Al_2O_3$. It is a solid oxide with high sodium ion ($Na^+$) conductivity and is being studied as a sodium solid electrolyte applied to Na-S batteries, Na-NiCl$_2$ batteries and AMTEC (Alkali Metal Thermo-Electric Convertor).

One of the methods for producing beta-alumina is vapor-phase conversion. This method produces a sintered body including alpha-alumina and zirconium, and then reacts it with sodium oxide ($Na_2O$) or the like to transform alpha-alumina into beta-alumina. This method has the advantages of suppressing the volatilization of sodium at high temperatures, which is a problem with the existing solid-state method, and producing a thin electrolyte.

Typically, the vapor-phase conversion uses a powder mixture manufactured by mixing alpha-alumina, a sodium source and a phase stabilizer, and then placing the powder mixture to surround a sintered body including alpha-alumina and zirconium and heat-treating.

However, the above method has a problem in that it is impossible to reuse the surrounding powder because it is difficult to distinguish between the surrounding powder used in the reaction and the surrounding powder not used in the reaction, and there is a limitation in that phase transformation can only be performed on one sintered body in one reactor. In addition, when the surrounding powder is used in powder form, there is a problem in that the surrounding powder sticks to the sintered body after the phase transformation, and thus, a separate process is required to remove the same.

**DISCLOSURE**

**TECHNICAL PROBLEM**

One of the several objects of the present invention is to provide a method for producing a sodium solid electrolyte by vapor-phase conversion that is capable of reducing process steps and manufacturing time, a sodium solid electrolyte and a stack for producing a sodium solid electrolyte.

One of the several objects of the present invention is to provide a method for producing a sodium solid electrolyte by vapor-phase conversion that is capable of reusing surrounding powder, a sodium solid electrolyte and a stack for producing a sodium solid electrolyte.

One of the several objects of the present invention is to provide a method for producing a sodium solid electrolyte by vapor-phase conversion that is capable of multiple production, a sodium solid electrolyte and a stack for producing a sodium solid electrolyte.

One of the several objects of the present invention is to provide a method for producing a sodium solid electrolyte by vapor-phase conversion that is capable of reducing the manufacturing cost, a sodium solid electrolyte and a stack for producing a sodium solid electrolyte.

The present invention is an invention that received support from the National Research and Development Program of the Republic of Korea, and the information on the National Research and Development Program is as follows.

Project Identification ID: 1415177724, Project Number: P0018443 (G02P12770000401)
Name of Ministry: Ministry of Trade, Industry and Energy, Name of Project Management (Specialized) Institution: Korea Institute for Advancement of Technology
Title of Research Project: Industrial Technology International Cooperation (R&D)
Title of Research Task: Scaling-Up Production of Planar Solid Electrolytes for Sodium-based Batteries (SUPS)
Contribution Ratio: 1/1, Name of Project Executing Institution: Pohang Institute of Industrial Science and Technology

Research Period: July 1, 2021 to June 30, 2022

## TECHNICAL SOLUTION

The method for producing a sodium solid electrolyte by vapor-phase conversion may include (a) preparing a sintered body for producing beta-alumina and a surrounding powder pellet (or a powder pack) including a sodium source, respectively; (b) laminating the sintered body and the surrounding powder pellet (or a powder pack) in alternation to prepare a stack; and (c) heat-treating the stack to subject the sintered body to vapor-phase conversion into beta-alumina.

In this case, the sintered body for producing beta-alumina may be a pre-sintered body of a starting material including a mixture of alpha-alumina and yttria-stabilized zirconia (YSZ).

Meanwhile, the surrounding powder may include alpha-alumina, $Na_2CO_3$ and $Li_2CO_3$.

In an example of the present invention, the surrounding powder pellet (or a powder pack) may be manufactured by pressurizing and molding surrounding powder.

In this case, the surrounding powder pellet (or a powder pack) may be plate-shaped.

In one example, the stack may be a laminate in which a surrounding powder pellet (or a powder pack), a sintered body and a surrounding powder pellet (or a powder pack) are sequentially laminated.

In another example, the stack may be a laminate in which a plurality of surrounding powder pellets (or powder packs) and a plurality of sintered bodies are alternately laminated.

The method for producing a sodium solid electrolyte by vapor-phase conversion, may further include preparing a new sintered body after vapor-phase conversion is completed, laminating the sintered body such that the sintered body is in contact with an unused surface of the surrounding powder pellet (or a powder pack) and additionally performing vapor-phase conversion.

In addition, the present invention may provide a sodium solid electrolyte, including a $Na^+$-beta-alumina/yttria-stabilized zirconia (YSZ) composite produced by the method.

In an embodiment of the present invention, the stack for producing a sodium solid electrolyte may be a laminate in which a surrounding powder pellet (or a powder pack); a pre-sintered body for producing beta-alumina; and a surrounding powder pellet (or a powder pack) are sequentially laminated, and wherein the surrounding powder pellet (or a powder pack) may be a molded body of surrounding powder including a sodium source.

In this case, the sintered body for producing beta-alumina may be a pre-sintered body of a starting material including a mixture of alpha-alumina and yttria-stabilized zirconia (YSZ).

In addition, the surrounding powder may include alpha-alumina, $Na_2CO_3$ and $Li_2CO_3$.

Meanwhile, the surrounding powder pellet may be plate-shaped.

## ADVANTAGEOUS EFFECTS

One of the several effects of the present invention is that it can provide a method for producing a sodium solid electrolyte by vapor-phase conversion that is capable of reducing process steps and manufacturing time, a sodium solid electrolyte and a stack for producing a sodium solid electrolyte.

One of the several effects of the present invention is that it can provide a method for producing a sodium solid electrolyte by vapor-phase conversion that is capable of reusing surrounding powder, a sodium solid electrolyte and a stack for producing a sodium solid electrolyte.

One of the several effects of the present invention is that it can provide a method for producing a sodium solid electrolyte by vapor-phase conversion that is capable of multiple production, a sodium solid electrolyte and a stack for producing a sodium solid electrolyte.

One of the several effects of the present invention is that it can provide a method for producing a sodium solid electrolyte by vapor-phase conversion that is capable of reducing the manufacturing cost, a sodium solid electrolyte and a stack for producing a sodium solid electrolyte.

However, the various advantageous and beneficial advantages and effects of the present invention are not limited to the above-described contents, and will be more easily understood in the process of describing specific embodiments of the present invention.

## DESCRIPTION OF DRAWINGS

FIG. 1 is a perspective view schematically showing a stack according to an embodiment of the present invention.
FIG. 2 is a perspective view schematically showing a stack according to another embodiment of the present invention.
FIGS. 3 and 4 are images schematically showing a process of reusing surrounding powder according to the present invention.

FIG. 5 is an image of a stack manufactured in Example 1 of the present invention.

FIG. 6 is an image of a solid electrolyte manufactured in the comparative example of the present invention.

FIG. 7A is a process diagram showing a process of preparing a surrounding powder pellet (or a powder pack) in an embodiment of the present invention.

FIG. 7B is a process diagram showing a process of preparing $Na^+$-$\beta/\beta''$-$Al_2O_3$ powder in the comparative example of the present invention.

## MODES OF THE INVENTION

Hereinafter, embodiments of the present invention will be described with reference to specific embodiments and the attached drawings. It should be understood that the technology described herein is not limited to specific embodiments, but includes various modifications, equivalents and/or alternatives of the embodiments of the present invention. In connection with the description of the drawings, similar reference numerals may be used for similar components.

Additionally, in order to clearly describe the present invention in the drawings, parts that are irrelevant to the explanation are omitted, and the thickness is enlarged to clearly express various layers and areas, and components with the same function within the scope of the same idea may be explained by using the same reference numerals.

In the present specification, the expressions "have", "may have", "include" or "may include" indicate the presence of a corresponding feature (e.g., a component such as a number, function, operation or part), and do not exclude the presence of additional features.

As used herein, the expressions "A or B", "at least one of A and/or B" or "one or more of A or/and B" may include all possible combinations of the listed items. For example, "A or B", "at least one of A and B", or "at least one of A or B" may all refer to (1) including at least one A, (2) including at least one B, or (3) including both at least one A and at least one B.

In the drawings, the X direction may be defined as a first direction, an L direction or a length direction, the Y direction may be defined as a second direction, a W direction or a width direction, and the Z direction may be defined as a third direction, a T direction or a thickness direction.

The present invention relates to a method for producing a sodium solid electrolyte by vapor-phase conversion. The method for producing a sodium solid electrolyte by vapor-phase conversion according to the present invention may include (a) preparing a sintered body for producing beta-alumina and a surrounding powder pellet (or a powder pack) including a sodium source, respectively; (b) laminating the sintered body and the surrounding powder pellet (or a powder pack) in alternation to prepare a stack; and (c) heat-treating the stack to subject the sintered body to vapor-phase conversion into beta-alumina.

In this case, the surrounding powder pellet (or powder pack) may be a molded body of the surrounding powder including a sodium source. In the case of the conventional vapor-phase conversion, there was a problem that it was difficult to reuse the surrounding powder because the surrounding powder was used in a powder form. In addition, there was a limitation that an additional process for removing the residual surrounding powder after the vapor-phase conversion was required. The method for producing a sodium solid electrolyte according to the present invention uses a surrounding powder pellet (or a powder pack) in a molded body form instead of a powder form, thereby enabling the reuse of the surrounding powder pellet (or a powder pack) and reducing the process steps.

The method for producing a sodium solid electrolyte by vapor-phase conversion according to the present invention may include (a-1) preparing a sintered body for producing beta-alumina. In one example, the sintered body for producing beta-alumina may be a pre-sintered body of a starting material including a mixture of alpha-alumina and yttria-stabilized zirconia (YSZ).

The (a-1) preparing a sintered body for producing the beta-alumina may include preparing a mixed powder including alpha-alumina and yttria-stabilized zirconia (YSZ), manufacturing the mixed powder into a molded body having a predetermined shape, and pre-sintering the molded body to manufacture a pre-sintered body.

The mixed powder may be prepared by mixing raw materials including alpha-alumina and yttria-stabilized zirconia (YSZ) with a solvent and then drying the same. The mixing may be performed by using a ball mill or the like, but is not limited thereto. In addition, after drying, a sieve may be used as needed to prepare a mixed powder having a uniform particle size.

The molded body may be manufactured by filling the mixed powder into a mold and the like and then by pressure molding such as CIP (Cold Isostatic Pressing) or press molding, but is not limited thereto. In addition, the pre-sintering of the molded body may be performed at a temperature of 1,400°C to 1,700°C, and may be sintered multiple times or sintered under pressure, but is not limited thereto.

In the case of the solid-state reaction method conventionally used for manufacturing beta-alumina, the initial raw material including $Na_2O$ having a $Na_2O$-$Al_2O_3$ binary system or a $Na_2O$-$Al_2O_3$-MgO (or $Li_2O$) ternary system and $Al_2O_3$ were mixed and then sintered to transform into $Na^+$-$\beta/\beta''$-$Al_2O_3$. However, although $Na^+$-$\beta/\beta''$-$Al_2O_3$ may obtain a solid electrolyte close to the theoretical density when it is densified at a high temperature for a long time, there is a problem that the ionic conductivity is lowered due to a rapid decrease in the $\beta''\text{-Al}_2\text{O}_3$ crystal phase fraction due to the volatilization of sodium oxide, and if heat treatment is performed for a long time at a temperature higher than the eutectic point of $\text{Na}_2\text{O-Al}_2\text{O}_3$, there is a disadvantage that the shape deformation such as a change in the straightness of the solid electrolyte may occur.

On the other hand, the method for producing a sodium solid electrolyte by vapor-phase conversion according to the present invention uses alpha-alumina ($\alpha\text{-Al}_2\text{O}_3$) and yttria-stabilized zirconia (YSZ) as initial raw materials and performs pre-sintering, thereby minimizing changes in the shape of the solid electrolyte due to heat treatment at high temperatures and producing a thin solid electrolyte.

The method for producing a sodium solid electrolyte by vapor-phase conversion according to the present invention may include (a-2) preparing a surrounding powder pellet (or a powder pack). The preparing a surrounding powder pellet (or a powder pack) may include preparing a surrounding powder and then forming the surrounding powder into a pellet or pack form. In this case, the surrounding powder may include alpha-alumina, $\text{Na}_2\text{CO}_3$ and $\text{Li}_2\text{CO}_3$.

The surrounding powder may be manufactured by mixing raw materials with a solvent and then drying the same. The mixing may be performed by using a ball mill or the like, but is not limited thereto. In addition, after drying, a sieve may be used as needed to manufacture a mixed powder having a uniform particle size.

In one embodiment of the present invention, the surrounding powder pellet (or powder pack) of the method for producing a sodium solid electrolyte by the phase conversion method according to the present invention may be manufactured by pressurizing and molding the surrounding powder. The pressurizing and molding may be performed by filling the surrounding powder into a mold or the like and then applying pressure from the outside. The method for producing a sodium solid electrolyte according to the present invention uses the surrounding powder pellet (or powder pack) manufactured by pressurizing and molding as a sodium source, thereby making it possible to easily identify the surrounding powder used for the phase conversion, and reuse of an unused area is possible such that the surrounding powder pellet (or powder pack) can be reused.

In one embodiment of the present invention, the surrounding powder pellet (or powder pack) of the method for producing a sodium solid electrolyte by vapor-phase conversion according to the present invention may be plate-shaped. The plate shape of the surrounding powder pellet (or powder pack) may mean a shape in which the sizes in the X direction and the Y direction are larger than the size in the Z direction, and may mean that the overall shape is a plate structure when observed with the naked eye, even if it is not completely horizontal but has some curves. The plate shape may have a plurality of angles on the X-Y plane, or may be a disc shape, and for example, when viewed in the Z direction, the outer shape may be a polygonal shape or a circular shape, but is not limited thereto.

The method for producing a sodium solid electrolyte by vapor-phase conversion according to the present invention may include preparing a sintered body for producing beta-alumina and a surrounding powder pellet (or powder pack), respectively, and then (b) alternately laminating the sintered body and the surrounding powder pellet (or powder pack) to prepare a stack.

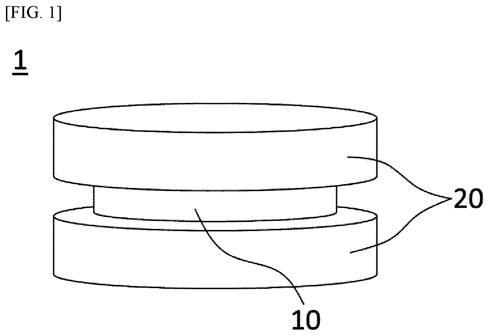

In one example, the stack used in the method for producing a sodium solid electrolyte by the vapor-phase conversion according to the present invention may have a structure in which a surrounding powder pellet (or powder pack), a sintered body and a surrounding powder pellet (or powder pack) are sequentially laminated. FIG. 1 is a perspective view schematically illustrating a stack according to the present example. Referring to FIG. 1, the stack used in the method for producing a sodium solid electrolyte according to the present invention may have a structure in which a surrounding powder pellet (or powder pack), a sintered body and a surrounding powder pellet (or powder pack) are sequentially laminated. The structure is a structure in which a sintered body for producing beta-alumina is placed between two surrounding powder packs, and the upper and lower portions of the sintered body for producing beta-alumina may be disposed so as to be in contact with the surrounding powder pellets (or powder packs). Through the above structure, a phase transformation may occur on both the upper and lower portions of the sintered body for producing beta-alumina, thereby shortening the time for producing beta-alumina.

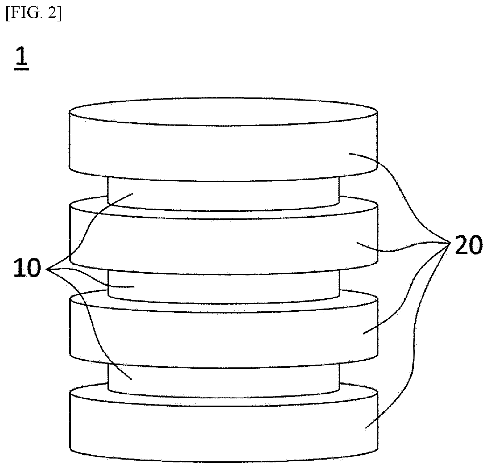

In another example, the stack of the method for producing a sodium solid electrolyte by the vapor-phase conversion according to the present invention may be a stack in which a plurality of surrounding powder pellets (or powder pack) and a plurality of sintered bodies are alternately laminated. FIG. 2 is a perspective view schematically illustrating a stack according to the present example. Referring to FIG. 2, the stack of the method for producing a solid electrolyte by vapor-phase conversion according to the present invention may have a structure in which a plurality of surrounding powder pellets (or powder packs) and a plurality of sintered bodies for producing beta-alumina are alternately laminated. In the above structure, the plurality of sintered bodies for producing beta-alumina may be placed to be in contact with the alternately laminated surrounding powder pellets (or powder packs), and by allowing a phase transformation to occur at the upper and lower portions of each sintered body, multiple production of beta-alumina may be possible through the plurality of sintered bodies in one process.

In one embodiment of the present invention, the sintered body for producing beta-alumina and the surrounding powder pellet (or powder pack) of the above-described stack may be placed in close contact with each other. That the sintered body and the surrounding powder pellet (or powder pack) are placed in close contact with each other may mean that the sintered body and the surrounding powder pellet (or powder pack) are in contact with each other without a gap.

The method for producing a sodium solid electrolyte by vapor-phase conversion according to the present invention may include (c) heat-treating the above-described stack to subject the sintered body to vapor-phase conversion into beta-alumina. The heat-treating serves to induce a phase transition such that the raw material included in the sintered body for producing beta-alumina becomes Na$^+$ beta-alumina, and may serve to induce densification of the solid electrolyte to impart mechanical strength.

The heat-treating is not particularly limited as long as it is a temperature at which phase conversion into beta-alumina is possible, but may be performed at a temperature in a range of, for example, 1,300°C to 1,500°C. In addition, the heat-treating may be performed for 2 hours to 14 hours, but is not limited thereto.

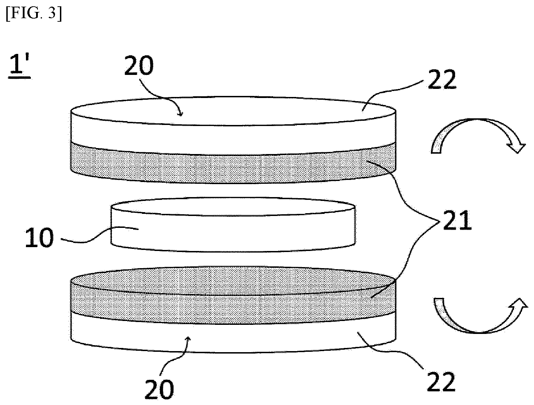

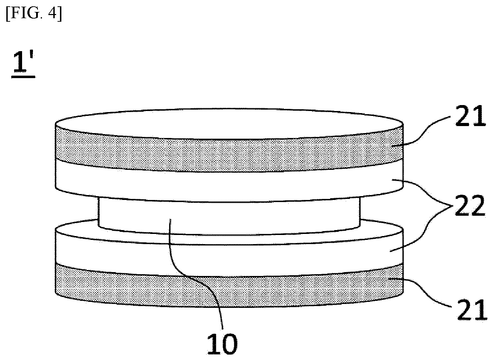

In one embodiment of the present invention, the method for producing a sodium solid electrolyte by vapor-phase conversion according to the present invention may further include preparing a new sintered body after the vapor-phase conversion is completed, laminating the sintered body so as to be in contact with an unused surface of the surrounding powder pellets (or powder packs), and vapor-phase converting the new sintered body into beta-alumina. FIGS. 3 and 4 schematically illustrate the method for producing a sodium solid electrolyte according to the present embodiment. Referring to FIGS. 3 and 4, the method for producing a sodium solid electrolyte according to the present invention positions a sintered body for producing beta-alumina between surrounding powder pellets (or powder packs), and then heat-treats the sintered body for producing beta-alumina to vapor-phase convert the same. The phase conversion is performed on a surface where the sintered body and the surrounding powder pellets (or powder packs) are in contact, and the surrounding powder pellets (or powder packs) after use may include a used area of the surrounding powder pellets (or powder packs) used through the phase conversion and an unused area of the surrounding powder pellets (or powder packs) that is not in contact with the sintered body. The unused area of the surrounding powder pellets (or powder packs) is an area that is not used for the phase conversion and may be used for the phase conversion of another sintered body for producing beta-alumina. In the present embodiment, after the phase conversion is completed, a new sintered body is prepared, the sintered body is placed so as to be in contact with the unused surface of the surrounding powder pellets (or powder packs), and then, the phase conversion is performed to reuse the surrounding powder pellets (or powder packs).

The present invention also relates to a sodium solid electrolyte. The sodium solid electrolyte according to the present invention may include a Na$^+$-beta-alumina/yttria-stabilized zirconia (YSZ) composite. The Na$^+$-beta-alumina/yttria-stabilized zirconia (YSZ) composite may be produced in the heat-treating step of the method for producing a sodium solid electrolyte by vapor-phase conversion. Since the contents of the beta-alumina, the yttria-stabilized zirconia and the heat-treating are the same as those described above, they will be omitted.

The present invention also relates to a stack for producing a sodium solid electrolyte. The stack for producing a sodium solid electrolyte according to the present invention may have a surrounding powder pellet (or a powder pack); a sintered body for producing beta-alumina; and a surrounding powder pellet (or a powder pack) that are sequentially laminated, and the surrounding powder pellet (or powder pack) may be a molded body of a surrounding powder including a sodium source.

In one example of the present invention, the sintered body for producing beta-alumina may include alpha-alumina and yttria-stabilized zirconia (YSZ).

In one embodiment of the present invention, the surrounding powder may include alpha-alumina, $Na_2CO_3$ and $Li_2CO_3$.

In one example, the surrounding powder pellet (or powder pack) may be plate-shaped.

Since the shapes of the surrounding powder pellets (or powder packs), sintered bodies for producing beta-alumina, alpha-alumina, yttria-stabilized zirconia (YSZ) and surrounding powder pellets (or powder packs) are the same as those described above, they will be omitted.

Hereinafter, the present invention will be described in more detail through specific examples. However, these examples are intended to illustrate the present invention and the scope of the present invention is not limited by these examples.

[Example]

**Preparation of sintered body for producing beta-alumina**

The starting materials, $\alpha$-$Al_2O_3$ and yttria-stabilized zirconia (YSZ), were mixed with methyl alcohol and then mixed and ground through a ball mill for 8 hours. The slurry prepared after the ball milling was dried in a drying oven for 24 hours, and then, a mortar and a sieve were used to prepare a powder with a uniform particle size.

After the powder was placed into a mold, a molded body was formed through a pressurized molding process, and the molded body was sintered at 1,600°C to prepare a sintered body for producing beta-alumina (Zirconia toughened alumina, ZTA).

**Manufacture of surrounding powder pellets**

The initial raw materials, $\alpha$-$Al_2O_3$ powder, sodium carbonate ($Na_2CO_3$) powder and lithium carbonate ($Li_2CO_3$) powder, were mixed with methyl alcohol as a solvent and ball milled for 5 hours to prepare a slurry. After ball milling, the slurry was dried in a drying oven for 24 hours or more. For the dried powder, a mortar and sieve were used to prepare a powder with a uniform particle size.

The prepared surrounding powder was filled into a mold and then formed through pressure molding to manufacture a surrounding powder pellet (green disk) in the shape of a disk.

**Example 1**

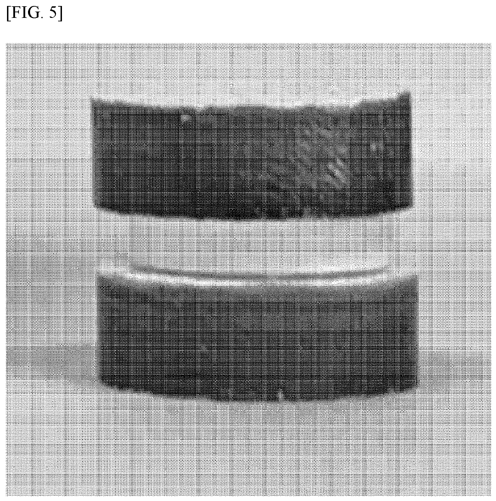

The manufactured surrounding powder pellets, the sintered body for producing beta-alumina and the surrounding powder pellets were sequentially laminated to prepare a stack. FIG. 5 is an image of a stack in which a sintered body for producing beta-alumina is placed between two surrounding powder pellets. As shown in FIG. 5, the laminated stack was placed in a magnesia (MgO) crucible, and then, the opening of the crucible was sealed to prevent the outflow of sodium oxide vapor to the outside.

The sealed crucible was heated to 1,450°C at a rate of 3.0°C/min in a furnace, and then, phase transformation was performed for 8 hours to transform $\alpha$-$Al_2O_3$ into $Na^+$-beta-alumina. After 8 hours, the crucible was naturally cooled to room temperature to produce a beta-alumina solid electrolyte.

**Comparative Example**

For the sintered body for producing beta-alumina, vapor-phase transformation was performed by using separate powder without using surrounding powder pellets.

Specifically, the initial raw materials, $\alpha$-$Al_2O_3$ powder, sodium carbonate ($Na_2CO_3$) powder and lithium carbonate ($Li_2CO_3$) powder, were mixed with methyl alcohol as a solvent and subjected to a ball milling process for 5 hours. After the ball milling, the powder was dried in a drying oven for 24 hours or more. The dried powder was used to manufacture powder with a uniform particle size.

The manufactured powder was placed in an alumina crucible and heat-treated in a furnace at 1,400°C for 2 hours to manufacture $Na^+$-$\beta/\beta''$-$Al_2O_3$ powder. The manufactured $Na^+$-$\beta/\beta''$-$Al_2O_3$ powder was mixed with methyl alcohol and subjected to a ball milling process for 5 hours to prepare a slurry. After the ball milling, the slurry was dried in a drying oven for more than 24 hours, and a mortar and sieve were used to manufacture $Na^+$-$\beta/\beta''$-$Al_2O_3$ powder having a uniform particle size.

The previously manufactured sintered body for producing beta-alumina was subjected to vapor-phase conversion using the $Na^+$-$\beta/\beta''$-$Al_2O_3$ powder. First of all, the $Na^+$-$\beta/\beta''$-$Al_2O_3$ powder was placed in a magnesia (MgO) crucible, and the sintered body for producing beta-alumina was positioned such that the $Na^+$-$\beta/\beta''$-$Al_2O_3$ powder surrounded the same.

The opening of the crucible was sealed, and the temperature was increased at a rate of 3.0°C/min to 1,450°C in a furnace, and then, a vapor-phase transformation was performed for 8 hours to transform $\alpha$-$Al_2O_3$ into $Na^+$-beta-alumina. After 8 hours, the crucible was naturally cooled to room temperature to produce a beta-alumina solid electrolyte.

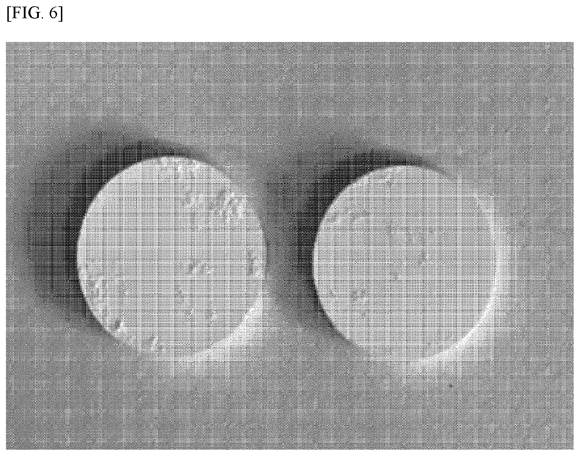

FIG. 6 is an image of a solid electrolyte manufactured using $Na^+$-$\beta/\beta''$-$Al_2O_3$ powder in the comparative example. As shown in FIG. 6, it can be seen that the solid electrolyte manufactured in the comparative example of the present invention had $Na^+$-$\beta/\beta''$-$Al_2O_3$ powder remaining on the surface. The conventional manufacturing method of manufacturing a solid electrolyte using $Na^+$-$\beta/\beta''$-$Al_2O_3$ powder has a problem in that a process for removing residual powder existing on the surface of the solid electrolyte must be added.

**Experimental Example 1: Phase fraction analysis of solid electrolyte**

The XRD pattern analysis of the $Na^+$-beta-alumina solid electrolyte was performed as follows. In order to precisely measure the phase-transferred solid electrolyte, the surface was polished using SiC paper, and then, the XRD pattern was analyzed for the surface of the polished solid electrolyte.

The measured peaks were analyzed with reference to the data of JCPDS Card 10-173 for the $\alpha$-$Al_2O_3$ phase, 31-1263 for the $\beta$-$Al_2O_3$ phase, and 31-1262 for the $\beta''$-$Al_2O_3$ phase. The fraction of the $Na^+$-$\beta/\beta''$-$Al_2O_3$ phase in the invention is calculated by [Mathematical Formula 1] below, under the assumption that the integrated intensities of phases other than the $\beta''$-$Al_2O_3$ phase are proportional to the fraction of each phase, when only three phases of the $Na^+$-$\beta/\beta''$-$Al_2O_3$ phase, that is, a-$Al_2O_3$, $\beta$-$Al_2O_3$ and $\beta''$-$Al_2O_3$ phases exist.

[Mathematical Formula 1]

$$\alpha\% = \frac{f(\alpha)}{f(\alpha)+f(\beta)+f(\beta'')} \times 100$$

$$\beta\% = \frac{f(\beta)}{f(\alpha)+f(\beta)+f(\beta'')} \times 100$$

$$\beta''\% = \frac{f(\beta'')}{f(\alpha)+f(\beta)+f(\beta'')} \times 100$$

The detailed peak calculation for each phase may be expressed as Mathematical Formula 2 below.

[Mathematical Formula 2]

$$f(\alpha) = \frac{1}{2}(I_{\alpha(104)}\frac{10}{9} + I_{\alpha(113)})$$

$$f(\beta) = \frac{1}{3}(I_{\beta(012)} + I_{\beta(026)}\frac{10}{3.5} + I_{\beta(017)}\frac{10}{5.5})$$

$$f(\beta'') = \frac{1}{2}(I_{\beta''(1011)}\frac{10}{4} + I_{\beta''(2010)}\frac{10}{8})$$

In [Mathematical Formula 2] above, the peaks of the (104) and (113) crystal planes of $\alpha$-$Al_2O_3$ (JCPDS file 10-173), the (012), (017) and (026) crystal planes of $\beta$-$Al_2O_3$ (JCPDS file 31-1263), and the (1011) and (2010) crystal planes of $\beta''$-$Al_2O_3$ (JCPDS file 31-1262) were used, and $I\alpha_{(104)(113)}$ represents the X-ray intensity of the (104) and (113) planes of $\alpha$-$Al_2O_3$, $I_{\beta(012)(026)(017)}$ represents the X-ray intensity of the (012), (017) and (026) planes of B-$Al_2O_3$, and $I_{\beta''(1011)(2010)}$ represents the X-ray intensities of the (1011) and (2010) planes of $\beta''$-$Al_2O_3$, respectively.

## Experimental Example 2: Measurement of resistivity and ionic conductivity

The value was calculated by using the measured resistance of the solid electrolyte according to the Nyquist plot analysis, Pt paste was used as the blocking electrode, and the electrode area was fixed at 0.2826 cm$^2$.

[Table 1]

|  | Comparative Example | Example 1 |
|---|---|---|
| Relative density (g/cm$^3$) | 99.8 | 99.9 |
| $\beta''$-$Al_2O_3$ phase fraction (%) | > 98 | > 98 |
| $\beta$-$Al_2O_3$ phase fraction (%) | < 2 | < 2 |
| Resistivity ($\Omega$·cm at 350 °C) | 35 | 33 |
| Ionic conductivity (S/cm at 350°C) | $2.8\times10^{-2}$ | $3.0\times10^{-2}$ |

Referring to Table 1 above, both examples, in which a beta-alumina solid electrolyte was manufactured by manufacturing surrounding powder pellets (or powder packs, Example 1), and the solid electrolyte manufactured by a conventional
manufacturing method using powder (Comparative Example), showed a $\beta''$-$Al_2O_3$ phase fraction of 98% or more, and it could be confirmed that they had values close to the theoretical density.

In addition, the ionic conductivities were found to be 0.03 S/cm and 0.028 S/cm, respectively. Considering the above results, it can be seen that the solid
electrolyte manufactured by the manufacturing method according to the present invention exhibits electrical characteristics that are equal to or superior to those of the solid electrolyte manufactured by the conventional powder-using method.

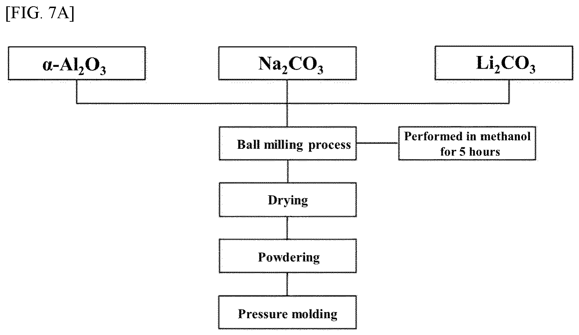

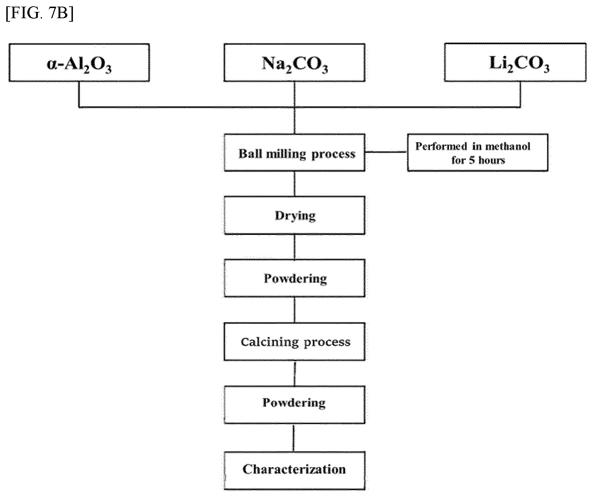

FIG. 7(A) is a process diagram schematically showing a manufacturing process of a surrounding powder pellet (or powder pack) according to an embodiment 20 of the present invention, and FIG. 7(B) is a process diagram schematically showing a manufacturing process of a $Na^+$-$\beta/\beta''$-$Al_2O_3$ powder according to a comparative example. Referring to FIG. 7(A) and FIG. 7(B), it can be confirmed that the manufacturing process of a surrounding powder pellet (or powder pack) according to an embodiment of the present invention is simpler than the manufacturing process of the $Na^+$-$\beta/\beta''$-$Al_2O_3$ powder of the comparative example.

Therefore, it can be confirmed that, compared to the conventional method of synthesizing a separate surrounding powder, the same vapor-phase conversion is possible using surrounding powder pellets (or powder packs) as in the conventional method, the process steps are reduced, and the shortcomings of the powder may be supplemented.

## Example 2

The performance of a solid electrolyte manufactured by reusing the surrounding powder pellets used in Example 1 was evaluated. As shown in the drawings, after the first vapor-phase conversion, the sintered body in which the phase conversion had occurred was removed, and the upper and lower sides of the used surrounding powder pellets (Green disk) were each turned over to the opposite surfaces that did not touch the specimen, and then, a new sintered body for producing beta-alumina was placed between two surrounding powder pellets, and then, the vapor-phase conversion was performed in the same manner as in Example 1 in a magnesia (MgO) crucible.

[Table 2]

|  | Example 1 | Example 2 |
|---|---|---|
| Relative density (g/cm³) | 99.9 | 99.9 |
| $\beta''$-$Al_2O_3$ phase fraction (%) | > 98 | > 98 |
| $\beta$-$Al_2O_3$ phase fraction (%) | < 2 | < 2 |
| Resistivity ($\Omega \cdot$cm at 350 °C) | 33 | 34 |
| Ionic conductivity | $3.0 \times 10^{-2}$ | $2.9 \times 10^{-2}$ |
| (S/cm at 350 °C) |  |  |

Referring to Table 2 above, it can be confirmed that even when the surrounding powder pellets were reused (Example 2), the $\beta''$-$Al_2O_3$ phase fraction was 98% or higher, and a result close to the theoretical density was shown. The ionic conductivities were also confirmed to have results of almost the same values as Example 1, at 0.03 S/cm and 0.029 S/cm. Through the above and the results, it can be confirmed that the method for producing a sodium solid electrolyte according to the present invention may reduce the manufacturing cost because the surrounding powder pellets can be reused.

## Example 3

A solid electrolyte was produced by multiple quantities by a method for producing a sodium solid electrolyte according to the present invention. Three sintered bodies for producing beta-alumina and four surrounding powder pellets were prepared, and then, these were alternately laminated to produce a stack as shown in FIG. 2. Vapor-phase conversion was performed on the stack including a plurality of sintered bodies for producing beta-alumina and a plurality of surrounding powder pellets under the same conditions as in Example 1.

[Table 3]

|  | Electrolyte 1 | Electrolyte 2 | Electrolyte 3 |
|---|---|---|---|
| Relative density (g/cm³) | 99.9 | 99.9 | 99.9 |
| $\beta''$-$Al_2O_3$ phase fraction (%) | > 98 | > 98 | > 98 |
| $\beta$-$Al_2O_3$ phase fraction (%) | < 2 | < 2 | <2 |
| Resistivity ($\Omega \cdot$cm at 350 °C) | 27 | 27 | 27 |
| Ionic conductivity (S/cm at 350 °C) | $3.6 \times 10^{-2}$ | $3.6 \times 10^{-2}$ | $3.6 \times 10^{-2}$ |

In Table 3, Electrolytes 1, 2 and 3 represent solid electrolytes manufactured in order from the bottom of the stack of Example 3, respectively. Referring to Table 3, the results of the physical property analysis after phase transition showed that all of three manufactured solid electrolytes had a fraction of $\beta''$-$Al_2O_3$ phase of 98% or more, showed results close to the theoretical density, and also showed the same numerical value of 0.036 S/cm for ionic conductivity. Through the above results, it was confirmed that the method for producing a sodium solid electrolyte according to the present invention allows for multiple production in one process, and that the performance of the solid electrolyte manufactured through multiple production is also excellent.

Although the embodiments of the present invention have been described in detail above, the present invention is not limited to the above-described embodiments and the attached drawings, but is intended to be limited by the appended claims. Accordingly, various forms of substitution, modification and change may be made by those skilled in the art within the scope that does not depart from the technical idea of the present invention described in the claims, and this will also be considered to fall within the scope of the present invention.

[Explanation of Reference Numerals]

| | | | | |
|---|---|---|---|---|
| 1, 1': | Stack | 10: | | Sintered body for producing beta-alumina |
| 20: | Surrounding powder pellet (or powder pack) | | | |
| 21: | Used area of surrounding powder pellet (or powder pack) | | | |
| 22: | Unused area of surrounding powder pellet (or powder pack) | | | |

**Claims**

1. A method for producing a sodium solid electrolyte by vapor-phase conversion, the method comprising:

   (a) preparing a sintered body for producing beta-alumina and a surrounding powder pellet comprising a sodium source, respectively;
   (b) laminating the sintered body and the surrounding powder pellet in alternation to prepare a stack; and
   (c) heat-treating the stack to subject the sintered body to vapor-phase conversion into beta-alumina.

2. The method of claim 1, wherein the preparing a sintered body for producing beta-alumina comprises preparing a pre-sintered body by pre-sintering a starting material comprising a mixture of alpha-alumina and yttria-stabilized zirconia (YSZ).

3. The method of claim 1, wherein the surrounding powder comprises alpha-alumina, $Na_2CO_3$ and $Li_2CO_3$.

4. The method of claim 1, wherein the surrounding powder pellet is manufactured by pressurizing and molding surrounding powder.

5. The method of claim 1, wherein the surrounding powder pellet is plate-shaped.

6. The method of claim 1, wherein the stack is a laminate in which a surrounding powder pellet, a sintered body and a surrounding powder pellet are sequentially laminated.

7. The method of claim 1, wherein the stack is a laminate in which a plurality of surrounding powder pellets and a plurality of sintered bodies are alternately laminated.

8. The method of claim 1, further comprising:
   preparing a new sintered body after vapor-phase conversion is completed, laminating the sintered body such that the sintered body is in contact with an unused surface of the surrounding powder pellet and additionally performing vapor-phase conversion.

9. A sodium solid electrolyte, comprising a $Na^+$-beta-alumina/yttria-stabilized zirconia (YSZ) composite produced by the method according to claim 1.

**10.** A stack for producing a sodium solid electrolyte, wherein

a surrounding powder pellet;
a pre-sintered body for producing beta-alumina; and
a surrounding powder pellet are sequentially laminated, and
wherein the surrounding powder pellet is a molded body of surrounding powder comprising a sodium source.

**11.** The stack of claim 10, wherein the sintered body for producing beta-alumina is a pre-sintered body of a starting material comprising a mixture of alpha-alumina and yttria-stabilized zirconia (YSZ).

**12.** The stack of claim 10, wherein the surrounding powder comprises alpha-alumina, $Na_2CO_3$ and $Li_2CO_3$.

**13.** The stack of claim 10, wherein the surrounding powder pellet is plate-shaped.

[FIG. 1]

<u>1</u>

[FIG. 2]

<u>1</u>

10

20

[FIG. 3]

[FIG. 4]

<u>1'</u>

[FIG. 5]

[FIG. 6]

[FIG. 7A]

```
┌──────────────┐      ┌──────────────┐      ┌──────────────┐
│   α-Al₂O₃    │      │    Na₂CO₃    │      │    Li₂CO₃    │
└──────┬───────┘      └──────┬───────┘      └──────┬───────┘
       └────────────────┐    │    ┌───────────────┘
                        │    │    │
                   ┌────┴────┴────┴────┐     ┌─────────────────────┐
                   │ Ball milling process ├─────┤ Performed in methanol │
                   └─────────┬─────────┘     │      for 5 hours       │
                             │               └─────────────────────┘
                   ┌─────────┴─────────┐
                   │      Drying       │
                   └─────────┬─────────┘
                             │
                   ┌─────────┴─────────┐
                   │     Powdering     │
                   └─────────┬─────────┘
                             │
                   ┌─────────┴─────────┐
                   │  Pressure molding │
                   └───────────────────┘
```

[FIG. 7B]

## INTERNATIONAL SEARCH REPORT

| International application No. |
|---|
| **PCT/KR2024/002166** |

| A. | CLASSIFICATION OF SUBJECT MATTER |
|---|---|

**C04B 35/113**(2006.01)i; **H01M 10/0562**(2010.01)i; **H01M 10/054**(2010.01)i

According to International Patent Classification (IPC) or to both national classification and IPC

| B. | FIELDS SEARCHED |
|---|---|

Minimum documentation searched (classification system followed by classification symbols)

C04B 35/113(2006.01); H01M 10/054(2010.01); H01M 10/0562(2010.01); H01M 10/39(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 베타-알루미나(β-alumina), 나트륨(sodium), 고체 전해질(solid electrolyte), 펠렛 (pellet), 기상전환(vapor phase conversion), 소결(sintering)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | PREETHY, P et al. Vapor Phase Conversion of α-Alumina + Zirconia Composites into Sodium Ion Conducting Na-β"-Alumina + Zirconia Solid Electrolytes. Journal of The Electrochemical Society. 2013, vol. 160, no. 11, pp. A2268-2280 (publication date:16 October 2013).<br>See pages A2268-2280. | 1-13 |
| A | KR 10-2014-0007673 A (KONKUK UNIVERSITY INDUSTRIAL COOPERATION CORP.) 20 January 2014 (2014-01-20)<br>See claims 1-13. | 1-13 |
| A | US 6537940 B1 (VIRKAR, Anil Vasudeo et al.) 25 March 2003 (2003-03-25)<br>See claims 1-31. | 1-13 |
| A | KR 10-2012-0062279 A (SAMSUNG SDI CO., LTD.) 14 June 2012 (2012-06-14)<br>See claims 1-16. | 1-13 |
| A | KR 10-2016-0078287 A (RESEARCH INSTITUTE OF INDUSTRIAL SCIENCE & TECHNOLOGY) 04 July 2016 (2016-07-04)<br>See claims 1-29. | 1-13 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 June 2024** | **05 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/002166**

| Patent document cited in search report | | | Publication date (day/month/year) | Patent family member(s) | | | Publication date (day/month/year) |
|---|---|---|---|---|---|---|---|
| KR | 10-2014-0007673 | A | 20 January 2014 | KR | 10-1404045 | B1 | 10 June 2014 |
| US | 6537940 | B1 | 25 March 2003 | AU | 1999-20992 | A1 | 26 July 1999 |
| | | | | AU | 2099299 | A | 26 July 1999 |
| | | | | DE | 69834390 | T2 | 07 September 2006 |
| | | | | EP | 0973700 | A1 | 26 January 2000 |
| | | | | EP | 0973700 | B1 | 03 May 2006 |
| | | | | JP | 2001-515454 | A | 18 September 2001 |
| | | | | JP | 4434321 | B2 | 17 March 2010 |
| | | | | US | 2003-0087752 | A1 | 08 May 2003 |
| | | | | US | 6117807 | A | 12 September 2000 |
| | | | | US | 6632763 | B2 | 14 October 2003 |
| | | | | WO | 99-35104 | A1 | 15 July 1999 |
| KR | 10-2012-0062279 | A | 14 June 2012 | KR | 10-1213481 | B1 | 20 December 2012 |
| | | | | US | 2012-0141879 | A1 | 07 June 2012 |
| | | | | US | 8951679 | B2 | 10 February 2015 |
| KR | 10-2016-0078287 | A | 04 July 2016 | KR | 10-1792241 | B1 | 31 October 2017 |

Form PCT/ISA/210 (patent family annex) (July 2022)